(19) **Europäisches Patentamt / European Patent Office / Office européen des brevets**

(11) **EP 1 507 987 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(21) Anmeldenummer: **03735493.3**

(22) Anmeldetag: **28.05.2003**

(51) Int Cl.:
*F16D 65/21* (2006.01)     *B60T 13/74* (2006.01)
*F16D 55/46* (2006.01)     *F16D 55/226* (2006.01)
*B60T 17/22* (2006.01)

(86) Internationale Anmeldenummer:
**PCT/EP2003/005645**

(87) Internationale Veröffentlichungsnummer:
**WO 2003/100282 (04.12.2003 Gazette 2003/49)**

(54) **FEHLER-SICHERHEITSKONZEPT FÜR EINE ELEKTROMECHANISCHE BREMSE MIT SELBSTVERSTÄRKUNG**

FAIL-SAFE CONCEPT FOR A SERVO-ASSISTED ELECTROMECHANICAL BRAKE

CONCEPT A SECURITE INTRINSEQUE POUR UN FREIN ELECTROMECANIQUE SERVO-ASSISTE

(84) Benannte Vertragsstaaten:
**AT BE BG CH CY CZ DE DK EE ES FI FR GB GR HU IE IT LI LU MC NL PT RO SE SI SK TR**

(30) Priorität: **28.05.2002 DE 10223768**

(43) Veröffentlichungstag der Anmeldung:
**23.02.2005 Patentblatt 2005/08**

(73) Patentinhaber: **Estop GmbH**
**82284 Grafrath (DE)**

(72) Erfinder:
• **HARTMANN, Henry**
**82229 Seefeld/Obb. (DE)**

• **SCHAUTT, Martin**
**80333 München (DE)**

(74) Vertreter: **Rupp, Christian**
**Mitscherlich & Partner**
**Patent- und Rechtsanwälte**
**Postfach 33 06 09**
**80066 München (DE)**

(56) Entgegenhaltungen:
EP-A- 1 026 060     DE-A- 19 947 204
US-A- 6 019 436     US-A- 6 152 545
US-A- 6 153 988     US-A1- 2001 020 562
US-B1- 6 318 513

**Beschreibung**

Die vorliegende Erfindung betrifft ein Fehler-Sicherheitskonzept für eine elektromechanische Bremse mit Selbstverstärkung, insbesondere ein Steuersystem zur Verwirklichung eines derartigen Fehler-Sicherheitskonzepts.

Elektromechanische Bremsen sind an sich bekannt, beispielsweise aus der DE 198 19 564 C2. Derartige elektromechanische Bremsen mit Selbstverstärkung haben den Vorteil, dass eine von einem elektrischen Aktuator erzeugte Betätigungskraft ohne eine Einleitung von Hilfskräften auf rein mechanischem Weg verstärkt wird, so dass der Anteil der Aktuatorkraft, der zum Hervorrufen einer gewünschten Reibkraft zwischen Bremse und Bremsscheibe erforderlich ist, im Vergleich zu herkömmlichen Bremsen drastisch verringert ist. Der Regelungsaufwand bei derartigen Bremsen im Vergleich zu bekannten hydraulischen Bremssystemen ist jedoch relativ hoch. Weiterhin hat der Gesetzgeber sehr strikte Bedingungen an die Ausfallsicherheit von Bremsen allgemein gestellt.

Dokument US 6 152 545 A offenbart ein Steuersystem gemäß dem Oberbegriff des Anspruch 1.

Daher ist die Aufgabe der vorliegenden Erfindung, ein Fehler-Sicherheitskonzept für elektromechanische Bremsen mit Selbstverstärkung zur Verfügung zu stellen, um die Fehlersicherheit einer derartigen Bremse zu erhöhen. Insbesondere sollen bei Auftreten eines Fehlers sicher fatale Folgen für das zu bremsende Gerät vermieden werden.

Diese Aufgabe wird durch ein Steuersystem für eine elektromechanische Bremse mit Selbstverstärkung gemäß Anspruch 1 gelöst. Vorteilhafte Weiterbildungen sind in den Unteransprüchen angegeben.

Erfindungsgemäß folgt bei Auftreten eines Fehlers ein Öffnen bzw. Schließen der Bremse abhängig von dem ermittelten Bewegungszustandes des zu bremsenden Geräts, im folgenden mit "Fahrzeug" bezeichnet. Dabei wird der Bewegungszustand des Fahrzeuges bspw. auf der Basis der Winkelgeschwindigkeit einer der Bremse zugeordneten Bremsscheibe ermittelt. Zusätzlich ist es von Vorteil, wenn der Bewegungszustand des Fahrzeuges auf der Basis der zeitlichen Änderung der Reibkraft bzw. des Reibmomentes zwischen der Bremse und einer der Bremse zugeordneten Bremsscheibe weiter spezifiziert wird, um bspw. sicher den Stillstand eines Fahrzeugs zu erkennen.

Weitere Merkmale, Vorteile und Eigenschaften der vorliegenden Erfindung werden nunmehr bezugnehmend auf Ausführungsbeispiele und die Figuren der beiliegenden Zeichnungen näher erläutert.

Figuren 1 bis 6 zeigen Seiten-, Schnitt- und Perspektivansicht einer an sich bekannten elektromechanischen Bremse mit Selbstverstärkung.

Figuren 7 und 8 zeigen schematische Blockschaltbilder zur Erläuterung des erfindungsgemäßen Steuersystems.

Figur 9 zeigt schematisch ein weiteres Ausführungsbeispiel, bei dem die Selbsthemmung einer Nachstelleinheit im Fehlerfall aufgehoben werden kann, um somit ein schnelles Öffnen der Bremse zu ermöglichen.

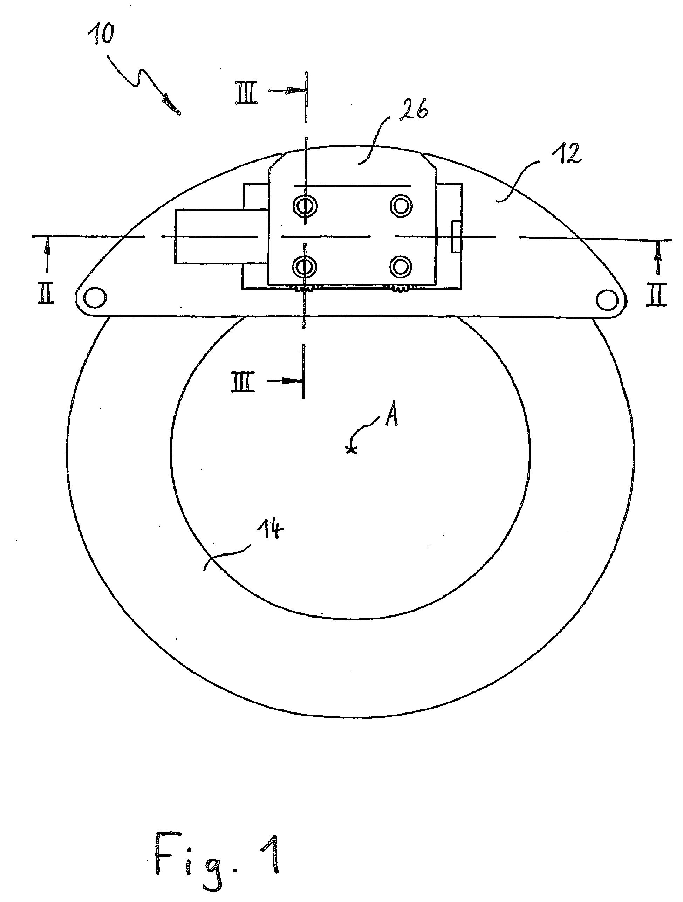

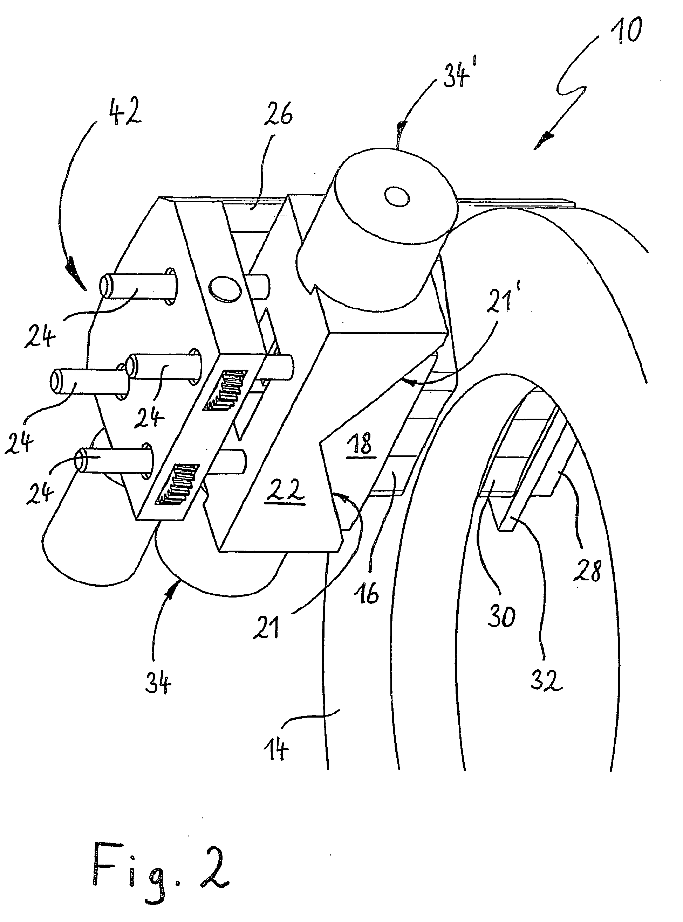

Figuren 1 und 2 zeigen eine als Scheibenbremse ausgebildete elektromechanische Bremse 10 mit einem Gehäuse 12 und einer um eine Achse A drehbaren Bremsscheibe 14.

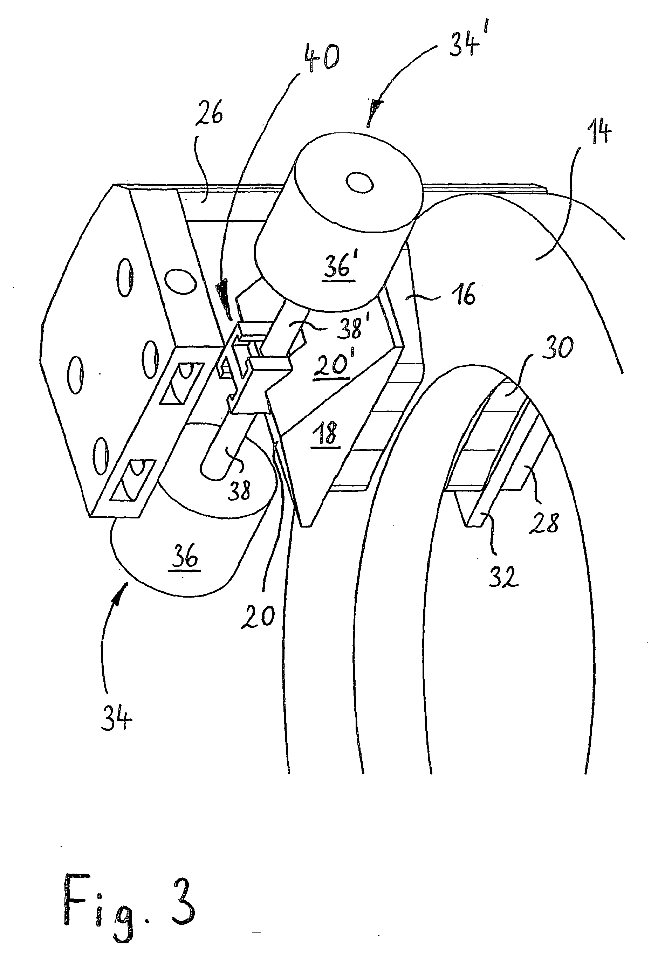

Wie besser aus den Figuren 3, 4 und 5 ersichtlich ist, weist die Bremse 10 einen ersten Reibbelag 16 auf, der mit der Vorderseite eines als Belagträger dienenden Keiles 18 fest verbunden ist, beispielsweise durch Kleben. Auf seiner Rückseite hat der Keil 18 für jede Drehrichtung der Bremsscheibe 14 eine Keilfläche 20 bzw. 20' die beide unter einem Steigungswinkel α zur Bremsscheibe 15 angeordnet sind und sich an komplementären Keilflächen 21, 21' eines blockförmigen Widerlagers 22 abstützten.

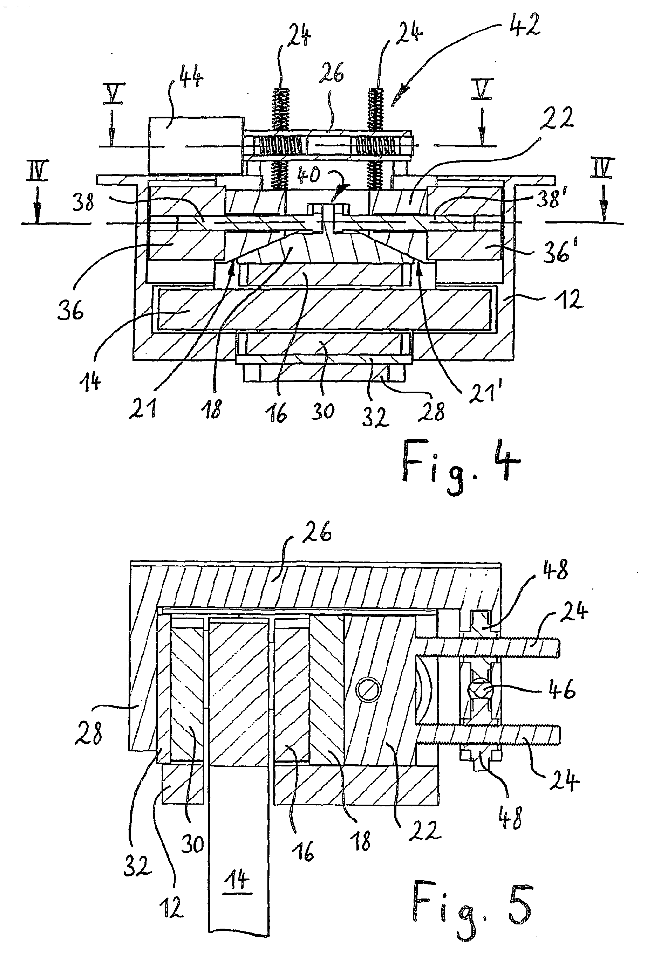

Das Widerlager 22 stützt sich über vier Gewindebolzen 24 an einem Bremssattel 26 (s. Figur 2 und 5) ab, der die Bremsscheibe 14 überspannt und einen zur Drehachse hingerichteten Arm 28 aufweist. Der Arm 28 dient zur Abstützung eines zweiten Reibbelages 30, der in üblicher Weise auf einer Belagträgerplatte 32 befestigt ist, die an der der Bremsscheibe 14 zugewandten Innenseite des Armes 28 anliegt.

Die Betätigungskraft der Bremse 10 wird von einem elektrischen Aktuator erzeugt, der zwei, hier als Linearaktuatoren ausgeführte Antriebe 34 und 34' umfasst. Jeder Antrieb 34, 34' umfasst einen Elektromotor 36, 36' und eine von ihm angetriebene Schubstange 38, 38', die mit dem Keil 18 in Wirkverbindung steht. Im hier dargestellten Ausführungsbeispiel hat jeder Elektromotor 36, 36' eine integrierte Spindelmutter (nicht dargestellt) und die Schubstangen 38, 38' sind jeweils als mit der Spindelmutter zusammenwirkende Spindel ausgebildet. Ein ebenfalls nicht dargestellter Drehwinkelgeber in jedem Elektromotor 36, 36' ermöglicht die Bestimmung der genauen Position der zugehörigen Schubstange 38, 38' basierend auf den vom Elektromotor 36 oder 36' ausgeführten Umdrehungen und der Steigung des Spindeltriebes.

Der Keil 18 und das Widerlager 22 sind Teil einer Selbstverstärkungseinrichtung zur Verstärkung der von den Antrieben 34, 34' erzeugten Betätigungskraft. Hierzu sind die freien Enden der Schubstangen 38 und 38' in einer auf der Rückseite des Keiles 18 vorhandenen Aufnahme 40 so gelagert, dass eine Translationsbewegung der Schubstangen 38, 38' zu einer entsprechenden Verschiebung des Keiles 18 nach links oder rechts führt (s. Figuren 3 und 4). Zum Betätigen der Bremse wird also der Keil 18 mit dem an ihm befestigten Reibbelag 16 in Drehrichtung der Bremsscheibe 14 verschoben, und zwar durch eine Translationsbewegung der beiden Schubstangen 38 und 38'. Dabei stützt sich der Keil 18 über seine eine Keilfläche 20 und 20' an der zugehörigen komplementären Keilfläche 21 oder 21' des Widerlagers 22 ab und bewegt sich nicht nur nach links oder rechts sondern auch auf die Bremsscheibe 14 zu. Sobald der erste Reibbelag 16 in Kontakt mit der Bremsscheibe 14 kommt, entsteht eine Reaktionskraft, die von dem Reibbelag 16 über den Keil 18 und das Widerlager 22 auf den Bremssattel 26 übertragen wird. Letzterer ist schwimmend auf dem Gehäuse 12 der Bremse 10 gelagert und wird von der genannten Reaktionskraft solange verschoben, bis der zweite Reibbelag 30 ebenfalls an die Bremsscheibe 14 anliegt (Schwimmsattelprinzip). Jede weitere translatorische Verschiebung des Keiles 18 in Betätigungsrichtung führt nun zu einem stärkeren Anpressen der beiden Reibbeläge 16 und 30 an die Bremsscheibe 14 und damit zum gewünschten Bremsvorgang. Ein Lösen der Bremse erfolgt durch Rückverschiebung des Keiles 18 in seine in Figur 4 wiedergegebene Ausgangsstellung. Zur Reibungsminderung können die Keilflächen 20, 20' und/oder die Widerlagerflächen 21, 21' beispielsweise mit Wälzkörpern (nicht dargestellt) versehen sein. Wie dargestellt, ist die Aufnahme 40 so ausgebildet, dass der Keil 18 sich in Richtung auf die Bremsscheibe 14 und von ihr wegbewegen kann, ohne dass die Schubstangen 38, 38' diese Bewegung mitmachen.

Damit die Bremse 10 einen sich abnutzenden Reibbelag ausgleichen kann, ist eine allgemein mit 42 bezeichnete Nachstelleinrichtung 42 vorhanden (s. Figur 2). Diese besteht (s. Figuren 4 und 5) aus einem Rotor 44, der eine Schnekkenwelle 46 treibt, die mit vier Zahnrädern 48 in Eingriff steht. Die Zahnräder 48 sind im Bremssattel 26 gelagert und weisen jeweils ein Innengewinde auf, das mit einem zugehörigen Gewindebolzen 24 in Eingriff steht, welche mit dem Widerlager 22 fest verbunden sind (s. Figur 5). Die Zahnräder fungieren demnach als Spindelmuttern eines Spindeltriebes, während die Gewindebolzen 24 die Spindelstangen darstellen. Im dargestellten Ausführungsbeispiel sind vier Gewindebolzen 24 vorhanden, von denen auf Grund des unterschiedlichen Drehsinns der Zahnräder 48 zwei Gewindebolzen 24 ein Linksgewinde und die anderen beiden Gewindebolzen 24 ein Rechtsgewinde aufweisen. Mittels des Motors 44 kann die Nachstelleinrichtung 42 somit den Abstand des Widerlagers 22 vom Bremssattel 26 vergrößern, d.h. das Widerlager 22 in Richtung auf die Bremsscheibe 14 bewegen. Auf diese Weise kann das Lüftspiel der Bremse 10, d.h. der bei gelöster Bremse vorhandene Abstand zwischen der Bremsscheibe 14 und der Reibbelagoberfläche, konstant gehalten werden.

Üblicherweise wird die Bremse 10 so ausgeführt sein, dass dann, wenn bei einer Bremsung ein großes Lüftspiel erkannt wird, eine Regelung die Nachstelleinrichtung 42 bei gelöster Bremse aktiviert, um das Lüftspiel wieder auf den konstruktiv vorgegebenen Wert zu verkleinern. Die Nachstelleinrichtung ist vorzugsweise selbsthemmend ausgebildet, um eine unbeabsichtigte Verstellung des Lüftspieles zu verhindern. Indessen kann, wie später im Detail erläutert, die Selbsthemmung der Nachstelleinrichtung 42 im Fehlerfall aufgehoben werden.

Die hier beschriebene Nachstelleinrichtung 42 stellt eine Möglichkeit dar, einen Reibbelagverschleiß auszugleichen. Andere Ausführungsformen der Bremse 10 können anstatt des Elektromotors 44 einen Ultraschallmotor, ein Schrittschaltwerk, einen Schrittmotor oder einen anderen geeigneten Antrieb aufweisen. Auch das Getriebe der Nachstelleinrichtung 42 kann abweichend ausgeführt sein, beispielsweise als Harmonik-Drive-Getriebe. Desweiteren müssen nicht wie dargestellt, vier Gewindebolzen 24 vorhanden sein, sondern es können mehr oder weniger Gewindebolzen sein und es sind schließlich auch andere Mittel als Gewindebolzen denkbar, um die beschriebene Relativverschiebung des Widerlagers 22 zu erreichen.

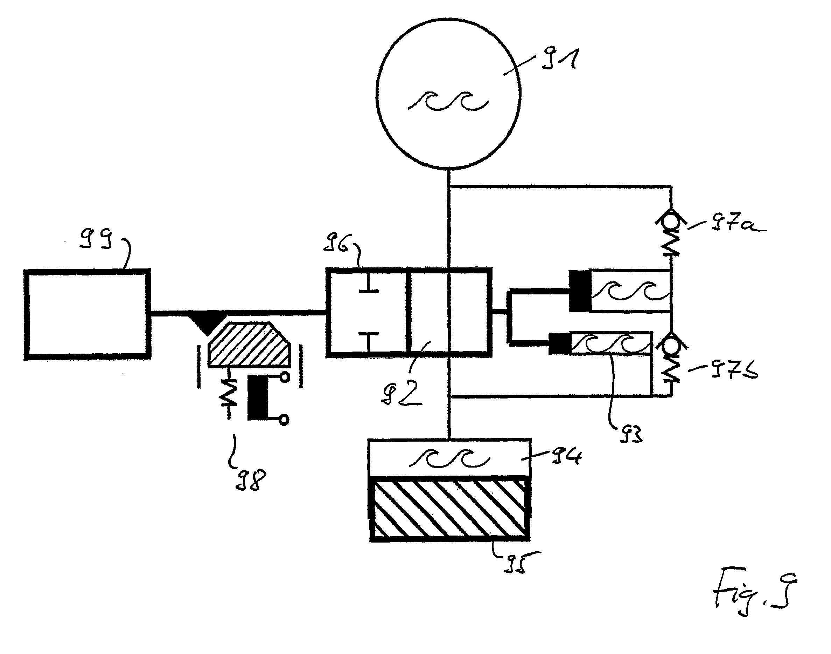

Im Rahmen der Fehlerbehandlung kommt der Nachstelleinrichtung darüber hinaus eine besondere Bedeutung als Mittel (Aktuator) zum Durchführen einer sogenannten Notlösung zu. Ein Ausführungsbeispiel mit einer hydraulischen Nachstellung mit automatischer Notlösung im Überlastfall wird später bezugnehmend auf FIGUR 9 erläutert.

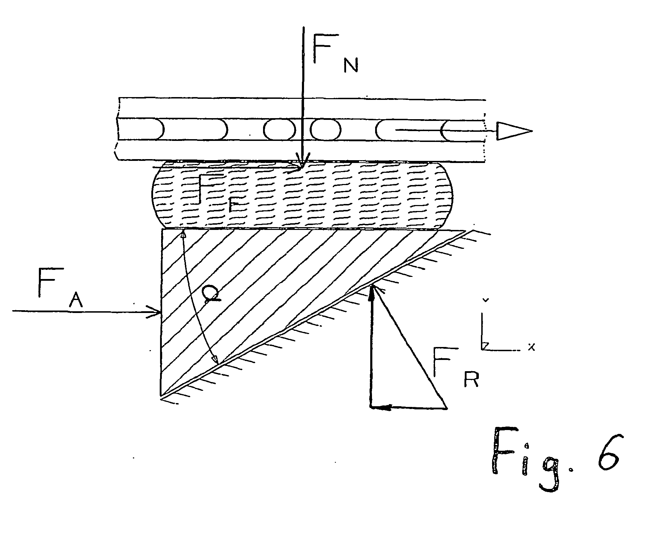

Im Folgenden wird die Funktion der elektromechanischen Bremse 10 und insbesondere der Selbstverstärkungseinrichtung anhand der Figur 6 kurz erläutert. Es wurde bereits erwähnt, dass die Selbstverstärkungseinrichtung für jede Drehrichtung der Bremsscheibe 14 eine Keilfläche 20 bzw. 20' aufweist, die sich an einer komplementär ausgebildeten Fläche 21 bzw. 21' des Widerlagers 22 abstützt. Im dargestellten Ausführungsbeispiel ist jede Keilfläche 20, 20' bzgl. der Bremsscheibe 14 unter einem wirksamen Keilwinkel $\alpha$ angeordnet. Dies muss jedoch nicht so sein, stattdessen kann der wirksame Keilwinkel für die eine Drehrichtung sich vom wirksamen Keilwinkel für die andere Drehrichtung unterscheiden. In Figur 6 sind mit Pfeilen die Kräfte angegeben, die auf den Keil 18 wirken.

Es sind dies:

- $F_A$ die in den Keil 18 eingeleitete Eingangskraft
- $F_R$ die sich bei einer Pressung ergebende, am Widerlager 22 abzustützende Auflagerkraft, die sich in eine der Eingangskraft $F_A$ entgegengesetzte Kraft $F_{Rx}$ und eine senkrecht zur Bremsscheibe stehende Druckkraft $F_{Ry}$ aufteilen lässt,
- $F_N$ die der Kraft $F_{Ry}$ entgegengerichtete Normalkraft an der Bremsscheibe und
- $F_F$ die am Keil bzw. Reibglied entstehende Reibkraft.
- Für den Reibungskoeffizienten $\mu$ gilt dabei die Beziehung $F_F = \mu \times F_N$.

Gemäß diesem Kräftegleichgewicht hängt die Reibkraft bzw. das Reibmoment an der Bremsscheibe 14 entsprechend der Beziehung

$$F_F = F_A \cdot \frac{\mu}{\tan(\alpha) - \mu}$$

lediglich vom Steigungswinkel $\alpha$, dem eine Störgröße darstellenden Reibungskoeffizient $\mu$ und der Eingangskraft $F_A$ ab.

Die Eingangskraft $F_A$, die gemäß Figur 6 bei einer Bremsbetätigung auf den Keil 18 wirkt, wird von den beiden Antrieben 34, 34' erzeugt. Bei gegebenen Reibungskoeffizient $\mu$ hängt das Maß der Selbstverstärkung der eingeleiteten Kraft $F_A$ nur vom Steigungswinkel $\alpha$ ab: Im Gleichgewichtszustand, d.h. wenn der Wert des Reibungskoeffizienten $\mu$ gleich dem Tangens des Steigungswinkels $\alpha$ ist, braucht die Bremse 10' - wenn der Reibbelag 16 in Kontakt mit der Bremsscheibe 14 ist - zur weiteren Bremsung keine Eingangskraft $F_A$ mehr. Diese Gleichgewichtszustand wird deshalb auch als der Punkt der optimalen Selbstverstärkung bezeichnet. Ist $\mu$ kleiner als tan $\alpha$ muss eine positive Eingangskraft $F_A$ vorhanden sein, um eine Bremsung aufrechtzuerhalten. Ist hingegen $\mu$ größer als tan $\alpha$, läuft die Bremse von alleine zu, d.h. die Bremskraft verstärkt sich ohne Vorhandensein einer Eingangskraft $F_A$ immer mehr bis zum Blockieren der Bremse. Soll dieser Blockierzustand vermieden bzw. eine gewünschte Bremskraft aufrechterhalten werden, muss eine negative Eingangskraft $F_A$ d.h. eine in die entgegengesetzte Richtung wirkende Eingangskraft $F_A$ auf den Keil 18 aufgebracht werden.

Damit die Eingangskraft $F_A$ klein sein kann, ist man bestrebt, die Bremse 10 in einem Bereich zu betreiben, in dem der Reibungskoeffizient $\mu$ zumindest ungefähr gleich dem Tangens des Steigungswinkels $\alpha$ ist (nachfolgend als "Normalfall" bezeichnet). In diesem Bereich geringer Betätigungskräfte arbeiten die beiden Antriebe 34 und 34' gegeneinander, d.h. die beiden Antriebe 34, 34' leiten über die Schubstangen 38, 38' einander entgegengerichtete Kräfte in den Keil 18 ein. Die entgegengerichteten Kräfte sind dabei so bemessen, dass ein Kraftüberschuss in der Richtung resultiert, in die der Keil 18 bei einer Betätigung verschoben werden soll.

Durch das gegenseitige Arbeiten der beiden Antriebe 34, 34' ist die Betätigung des Keils 18 spielfrei. Diese Spielfreiheit ist für den Betrieb der Bremse 10 im Bereich der optimalen Selbstverstärkung wichtig, denn in diesem Bereich kann es aufgrund des sich während des Betriebes der Bremse ändernden Reibungskoeffizienten $\mu$ zu einem schnellen Wechsel zwischen Zuständen, in denen $\mu$ kleiner als tan $\alpha$ ist, und Zuständen, in denen $\mu$ größer als tan $\alpha$ ist, kommen. Mit anderen Worten, in dem Bereich um den Punkt der optimalen Selbstverstärkung herum kann es einen schnellen Wechsel zwischen Zuständen geben, in denen eine positive Eingangskraft $F_A$ gefordert ist, und Zuständen, in denen eine negative Eingangskraft $F_A$ notwendig ist, um eine bestimmte, gewünschte Bremskraft aufrechtzuerhalten. Wäre der Aktuator nicht spielfrei, würde bei jedem Vorzeichenwechsel der Eingangskraft $F_A$ das im Aktuator vorhandene Spiel durchlaufen werden, was zu undefinierten Zuständen und damit zu einer schlechten Regelbarkeit der Bremse führen würde. Die spielfreie Betätigung mittels der beiden im Normalfall gegenseitig arbeitetenden Antriebe 34, 34' vermeiden dieses Problem wirkungsvoll.

In Betriebszuständen, in denen sich der Wert des Reibungskoeffizienten $\mu$ stark vom Tangens des Steigungswinkels $\alpha$ unterscheidet, sind größere Eingangskräfte $F_A$ erforderlich, um eine gewünschte Bremswirkung zu erzielen. In solchen Betriebszuständen arbeiten die beiden Antriebe 34, 34' miteinander, d.h. sie erzeugen gleichgerichtete Kräfte, in dem einer der Antriebe auf dem Keil 18 drückt und der andere Antrieb am Keil 18 zieht. Damit ein solches gleichsinniges Wirken der Antriebe möglich ist, sind beide Antriebe 34, 34' umsteuerbar ausgeführt, d.h. ihre Betätigungsrichtung lässt sich umkehren. Im gleichsinnigen Betrieb der Antriebe 34, 34' arbeitet der Aktuator der Bremse 10 nicht mehr spielfrei. Dies ist in der Praxis jedoch zulässig, da Betriebszustände, in denen erhöhte Eingangskräfte $F_A$ erforderlich sind, nur bei extremen Reibwerten auftreten. Somit ist sichergestellt, dass es nicht zu einem Wechsel der Betätigungsrichtung im Betrieb kommen kann, wie dies für Reibwerte $\mu$ in der Nähe der des Tangens des Steigungswinkels $\alpha$ der Fall sein könnte.

Wie bereits kurz angedeutet wurde, kann sich der Reibungskoeffizient $\mu$ in Abhängigkeit der Belastung der Bremse relativ stark ändern. Jede Reibwertänderung während eines Bremsvorganges führt jedoch zu einer Änderung der Reibkraft $F_F$ und somit zu einer sich ändernden Verzögerung des abzubremsenden Bauteiles der Bremse, welches vorliegend durch die Bremsscheibe 14 gebildet ist. Um diese unerwünschten Reibwertänderungen auszuregeln, ist die dargestellte Scheibenbremse mit einer Einrichtung zur Ermittlung des Reibmomentes ausgestattet. Die Einrichtung zur Ermittlung des Reibmomentes umfasst dabei erste Mittel zur Messung der Reibkraft und optional zweite Mittel zur Bestimmung zwischen der Bremsscheibe und dem Reibbelag wirkenden Normalkraft. Beispielsweise wird dabei die Reibkraft durch einen Sensor gemessen, der die bei einer Bremsung vom Bremssattel in das Chassis eingeleitete Kraft misst.

Diese Kraft führt zu Verformungen, welche durch geeignete Sensoren gemessen werden können. Ein solcher Sensor ist beispielsweise ein Dehnungsmessstreifen, der an einer geeigneten Stelle angebracht ist, beispielsweise an der Halterung des Bremssattels am Chassis. Zusätzlich zu der bei einer Bremsung auftretenden Reibkraft kann wie gesagt auch die zwischen der Bremsscheibe und dem Reibbelag wirkende, normal zur Bremsscheibe gerichtete Kraft ermittelt werden. Aus der gemessenen Normalkraft und dem gemessenen Reibmoment lässt sich der Reibwert bestimmen. Auf diese Weise ist es möglich, die Plausibilität des gemessenen Reibwerts zu überprüfen und mögliche Störungen, insbesondere mechanische Störungen wie z.B. in der Reibpaarung Belag/Scheibe (Verölen oder Verglasen der Beläge etc.) oder in den Sattelführungen, anhand eines entsprechenden Reibwerts oder einer Reibwertänderung aufzudecken.

Gezielte Änderungen des Reibmomentes, wie sie beispielsweise für Regelvorgänge von Bremsschlupfregelsystemen, Traktionskontrollsystemen und Fahrstabilitätssystemen in Kraftfahrzeugen erforderlich sind, können mit dem vorgestellten Bremssystem schnell und exakt ausgeführt werden. Die Vorgaben hierfür kommen von einem zentralen Steuergerät 72, welches unter anderem Funktionen wie die Fahrdynamikregelung oder einen Bremsassistenten realisiert. Alternativ kann die Einrichtung zur Ermittlung des Reibmomentes erste Mittel zur Bestimmung der Aktuatorkraft und zweite Mittel zur Bestimmung der zwischen der Bremsscheibe und dem Reibbelag wirkenden Normalkraft aufweisen. Ebenso wie bei der obigen Lösung wird demnach auch hier die normal zur Bremsscheibe gerichtete Kraft ermittelt, um die Regelungsdynamik und damit die Gesamtqualität der Bremsregelung zu verbessern. Statt der mit Störgrößen behafteten Messung der Reibkraft wird jedoch bei der zweiten Lösung, die während einer Bremsung aufgebrachte Aktuatorkraft bestimmt. Dies ermöglicht einen kompakteren Aufbau der Bremse, weil kein entfernter, beispielsweise am Bremsträger angebrachter Sensor zur Messung der Reibkraft mehr erforderlich ist. Das Reibmoment wird indirekt bestimmt, ohne dass die Bremskraft direkt gemessen werden muss.

Aus der Beziehung

$$F_A = F_N \times (\tan \alpha - \mu)$$

kann der Reibkoeffizient $\mu$ errechnet werden, denn der Keilwinkel $\alpha$ ist eine vorgegebene und damit bekannte geometrische Größe der Bremse. Mit dem wirksamen Bremsscheibenradius einer ebenfalls bekannten geometrischen Größe, erhält man dann das gesuchte Reibmoment $M_{Fi}$. Das Reibmoment $M_{Fi}$ kann dabei aus der Kenntnis der Normalkraft $F_N$ und der Aktuatorkraft $F_A$ ermittelt werden. Die Aktuatorkraft kann direkt gemessen werden, vorzugsweise mit einem im Kraftfluss der Aktuatorkraft angeordneten Kraftsensor, der beispielsweise ein Dehnungsmessstreifen sein kann. Der Kraftsensor kann z.B. die Reaktionskraft erfassen, mit der sich ein dem Aktuator zugehöriger Elektromotor am Gehäuse des Aktuators bzw. der Bremse abstützt. Der Kraftsensor kann aber auch an der Stelle angeordnet sein, an der die Aktuatorkraft in den Keil der Keilanordnung eingeleitet wird. Ebenso kann ein Kraftsensor in oder an einem Kraftübertragungsmittel des Aktuators angeordnet sein, beispielsweise an einer Spindel oder einer Zug- bzw. Druckstange.

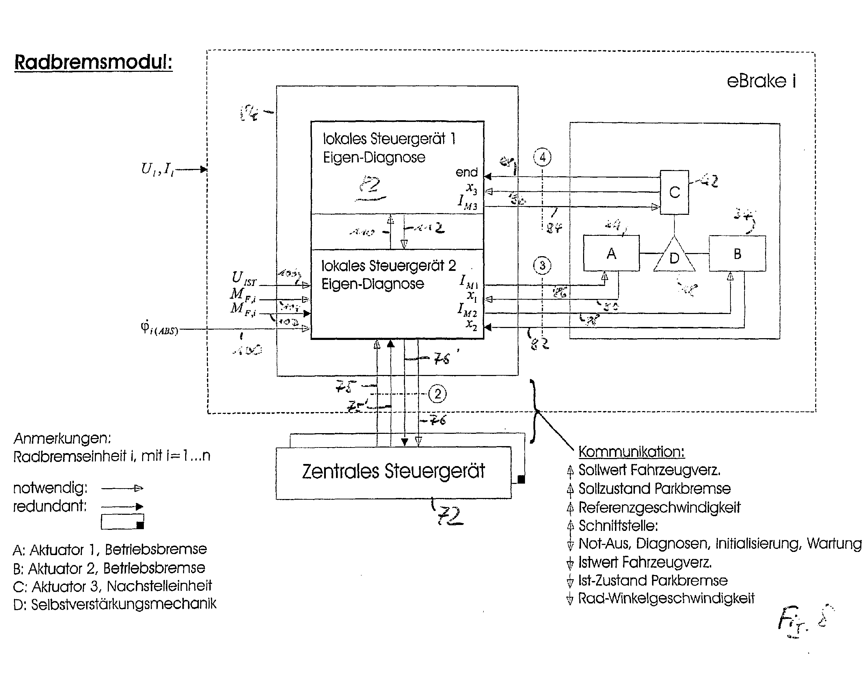

Die Aktuatorkraft muss aber nicht direkt gemessen werden, sondern kann indirekt ermittelt werden, beispielsweise aus dem Motorstrom des dem Aktuator zugehörigen Elektromotors. Der Motorstrom ist ein Maß für das vom Motor abgegebene Drehmoment, welches beispielsweise durch einen Spindeltrieb in eine Axialkraft gewandelt wird. Der Motorstrom $I_{M1}$ bzw. $I_{M2}$ (vgl. Fig. 8) ist deshalb proportional zu erzeugten Aktuatorkraft. Bei nicht zu hohen Anforderungen an die Betätigungsdynamik ist eine solche indirekte Ermittlung der Aktuatorkraft eine geeignete und günstige Lösung.

Bei den beiden oben beschriebenen Lösungen kann die normal zur Bremsscheibe gerichtete Kraft mittels eines im Kraftfluss der Normalkraft angeordneten Kraftsensors gemessen werden. Beispielsweise kann die Messung der Normalkraft in den Reibbelägen selbst oder in bzw. an den Belagträgern erfolgen, ferner an den Abstützflächen des Keils der Keilanordnung, oder in dem die Bremsscheibe übergreifende Sattel oder auch im Rahmen der Scheibenbremse. Generell ist eine Messung von Kräften nahe dem Entstehungsort vorteilhaft, um eine Verfälschung der Messsignale durch träge Massen zu vermeiden.

Die Normalkraft kann jedoch auch indirekt bestimmt werden, z.B. aus dem Maß der bei einer gegebenen Bremsung erfolgenden Verschiebung der Keilanordnung. Bei einem Bremsvorgang führt die Normalkraft zu einer Aufweitung des Sattels der Scheibenbremse und zu einer Kompression der Reibbeläge, in geringem Umfang, auch der Bremsscheibe. Diese Elastizitäten der Bremse werden durch eine entsprechende Verschiebung des Keils in Betätigungsrichtung ausgeglichen. Bezeichnet man mit dem Begriff Nullage die eine Stellung der Reibbeläge, bei der das sogenannte Lüftspiel gerade überwunden ist, die Reibbeläge somit kraftfrei an der Bremsscheibe anliegen, dann kann aus dem Maß der Verschiebung des Keils in Betätigungsrichtung die Normalkraft bzw. deren Änderung berechnet werden. Die Federkennlinie des Systems Bremse (Sattel, Beläge, Scheibe)ist im jeweiligen Betriebspunkt linearisierbar, somit ist die Normalkraft im jeweiligen Betriebspunkt direkt proportional zum Verschiebeweg des Keils.

Der Verschiebeweg des Keils x1 bzw. x2 (vgl. Fig. 8) kann entweder direkt gemessen werden oder er kann aus den Betriebsdaten des Aktuators ermittelt werden. Beispielsweise ist es möglich, aus dem Motordrehwinkel des dem Aktuator zugehörigen Elektromotors den Verschiebeweg des Keils zu berechnen, jedenfalls dann, wenn der Elektromotor über ein steigungstreues Vorschubsystem auf den Keil einwirkt.

Weiterhin kann die Aufweitung des Bremssattels mit einem handelsüblichen Positionsmesssystem ermittelt werden. Da der Zusammenhang zwischen der Aufweitung des Bremssattels in Abhängigkeit der wirkenden Normalkraft für praktische Zwecke linear oder zumindest reproduzierbar ist, stellt die Messung der Aufweitung des Bremssattels eine weitere Möglichkeit dar, die Normalkraft $F_N$ zu ermitteln.

Generell ist die Normalkraft eine Hilfsgröße, deren Ermittlung dazu dient, die Dynamik der Reglung zu verbessern, da die direkte Messung des Reibmomentes aufgrund der erforderlichen Störgrößenfilterung nicht ausreichend schnell erfolgen kann. Mit anderen Worten, der aktuelle Wert des Reibmomentes steht erst mit einer gewissen Verzögerung zur Verfügung. Die an sich mögliche hochdynamische Betätigung einer elektromechanischen Bremse erfordert, wenn die Vorteile einer solchen hochdynamischen Betätigung ausgenutzt werden sollen, eine entsprechend hoch dynamische Regelung, welche mittels der Reibkraftmessung aus den bereits eingangs dargelegten Gründen nicht möglich ist. Die Ermittlung der als Hilfsgröße fungierende Normalkraft hingegen kann schnell und genau erfolgen, beispielsweise, wie schon erwähnt, durch eine Messung der Position des Keils. Die Position des Keils ist, sofern die Reibbeläge an der Bremsscheibe anliegen, im linearisierten Betriebspunkt proportional zur Aufweitung des Bremssattels und damit zur Normalkraft $F_N$. Soll im Betrieb der Bremse, ausgelöst z.B. durch einen ABS-Regelungsvorgang, das Reibmoment der Bremse um einen bestimmten Betrag reduziert werden, kann die Regelung die erforderliche neue Keilposition berechnen und mittels des Aktuators sehr schnell einstellen. Eine Überprüfung des tatsächlichen Reibmomentes erfolgt dann durch die Reibkraftmessung.

Die sich im Betrieb der Bremse einstellende Abnutzung der Reibbeläge führt zu einer Veränderung der Nullage. Die Nullage muss daher ggf. durch die Regelung der Bremse immer wieder neu detektiert werden. Eine einfache Möglichkeit zur Bestimmung der Nullage ist die Reibkraftmessung. Die Reibkraft steigt nämlich in dem Moment sprunghaft an, in dem der Reibbelag die Bremsscheibe berührt. Somit lässt sich die Keilposition, bei der der Reibbelag und die Bremsscheibe miteinander in Kontakt kommen, einfach detektieren.

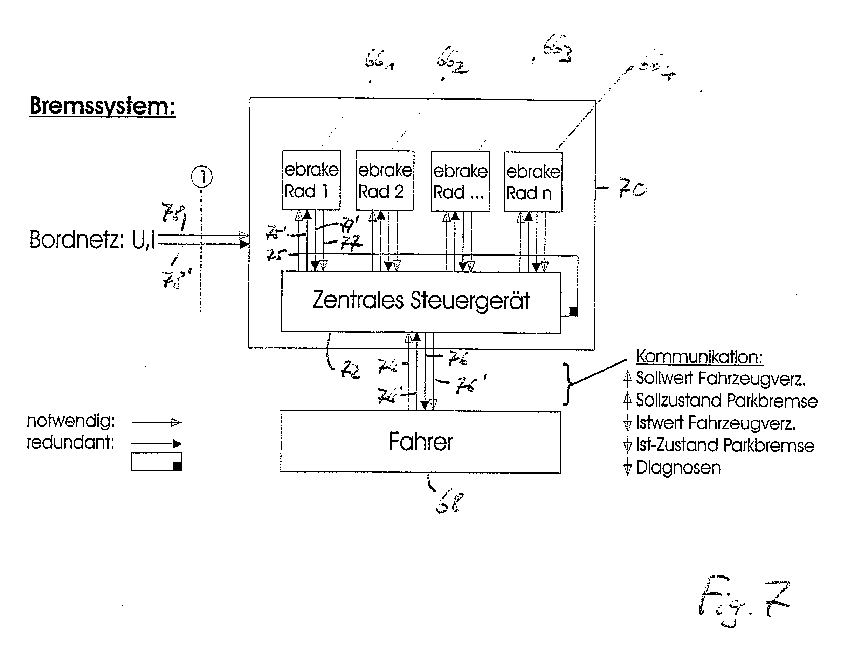

Im folgenden wird auf Figuren 7 und 8 Bezug genommen.

Das in der Fig. 8 gezeigte lokale Steuergerät bzw. die Haupt-Steuereinheit 80 wertet die erhaltenen Signale aus und nimmt insbesondere ein Vergleich zwischen einem vorgegeben Sollwert der Reibkraft und dem tatsächlichen Istwert der Reibkraft vor. Entsprechend dieser Auswertung der Signale werden die Antriebe 34, 34' von dem Steuergerät so angesteuert, dass durch Verschiebung des Keils 18 in oder entgegen der Drehrichtung der Bremsscheibe 14 eine Erhöhung oder Erniedrigung des Istwertes der Reibkraft erreicht wird, um den Reibkraft-Istwert an den Reibkraft-Sollwert heranzuführen.

Die Reibkraftregelung der Bremse wird im dargestellten Ausführungsbeispiel über eine Positionsregelung des Keiles 18 erreicht. Regelungstechnisch ist dies vorteilhaft, da zwischen der Keilposition und der im Bremssattel wirkenden Normalkraft über die Sattelsteifigkeit ein kurzfristig linearisierbarer Zusammenhang besteht, mit dessen Hilfe sich die Reibkraft einfach, schnell und zuverlässig regeln lässt. Dies setzt die Annahme näherungsweise konstanter Reibungsverhältnisse während eines Zeitschrittes der Regelung voraus und kann beispielsweise mit einer Kaskadenregelgung realisiert werden, die einen äußeren Regelkreis und einen inneren Regelkreis umfasst. Im äußeren Regelkreis ist das (gewünschte) Bremsmoment die Regelgröße während die Keilposition oder die Motordrehgeschwindigkeit die Stellgröße ist. Im inneren Regelkreis ist die Keilposition oder die Motordrehgeschwindigkeit die Regelgröße, während die Stellgröße der Motorstrom der Elektromotoren 36, 36' der Antriebe 34, 34' ist. Die Position des Keiles 18 lässt sich aufgrund der im Normalfall spielfreien Betätigung des Keiles 18 präzise durch die genannten Drehwinkelgeber bestimmen, die in den Elektromotoren 36, 36' enthalten sind.

Die Figuren 7 und 8 zeigen jeweils ein Blockschaltbild zur Erläuterung des erfindungsgemäßen Fehler-Sicherheitskonzepts (fail-save-concept) für eine elektromotorische Bremse (EMB) mit Selbstverstärkung, wie sie in den vorangegangenen Figuren gezeigt und erläutert wurde. In Figur 7 sind dabei ein Fahrersystem 68 und ein Bremssystem 70 dargestellt, sowie der Informationsfluss zwischen diesen beiden Systemen. Vom Fahrersystem 68, das die vom Fahrer betätigten Bremseinheiten, z.B. Pedale usw., umfasst, werden Informationen über den Sollwert der Fahrzeugverzögerung und den Sollzustand der Feststellbremse (ja/nein) an das Bremssystem 70 übermittelt. Dies wird durch den Pfeil 74 verdeutlicht. Die in der Fig. 7 nicht ausgefüllte Pfeilspitze des Pfeils 74 soll dabei angeben, dass es sich um einen "notwendigen" Informationsfluss handelt.

Die ausgefüllte Pfeilspitze des Pfeils 74' angeben, dass es sich um einen "redundanten" Informationsfluss handelt. Diese Symbolik gilt gleichermaßen für alle in den Figuren 7 und 8 dargestellten Pfeile bzw. Informationsflüsse.

Die Informationen werden der übergeordneten Steuerungseinrichtung 72 des Bremssystems 70 zugeführt. Die übergeordnete Steuerungseinrichtung 72 steuert die einzelnen Bremsmodule $66_i$ des jeweiligen Fahrzeugs an. Bei einem Pkw kann dabei beispielsweise - wie in Fig. 7 exemplarisch dargestellt - für jedes der vier Räder je ein Bremsmodul $66_1$, $66_2$, $66_3$, $66_4$ vorgesehen sein. Im Allgemeinen kann es sich dabei um n Bremsmodule $66_1$, $66_2$, ... $66_n$ handeln. Dabei tauscht die übergeordneten Steuerungseinrichtung 72 über redundante Informationswege 75 bzw. 75' und 77 bzw. 77' Informationen mit jeder Bremseinheit $66_1$, $66_2$, ..., $66_n$ aus, die zur Umsetzung der jeweiligen Bremsbefehle des Fahrers dienen. Von der übergeordneten Steuerungseinrichtung 72 werden Informationen bezüglich des Ist-Wertes der Fahrzeugverzögerung, des Ist-Wertes der Feststellbremse sowie Diagnoseinformationen an das Fahrersystem 68 übermittelt. Dies wird durch den Pfeil 76 verdeutlicht. Auch dieser Informationsfluss ist redundant, wie durch den Pfeil 76' verdeutlicht ist. Das zentrale Steuergerät 72 kann dabei weiterhin durch Ausbildung einer zweiten vergleichbaren Einheit 72' redundant ausgebildet sein, was die Sicherheit weiter erhöht.

Das Bremssystem 70 wird über eine Stromversorgungsleitung 78 über das Bordnetz mit Strom I bzw. Spannung U versorgt. Auch diese Stromzufuhr ist aus Sicherheitszwecken redundant, wie durch den Pfeil 78' verdeutlicht ist. Dabei wird die zweite Stromversorgung 78' vorteilhafterweise von einem getrennten zweiten Stromkreis, beispielsweise über eine zweite Batterie, versorgt. Wesentlich ist dabei, dass die primäre und die redundante Stromversorgung voneinander entkoppelt sind. Fällt die primäre Stromversorgung aus, beispielsweise in Folge eines Kurzschlusses, kann somit die weitere Stromversorgung durch den redundanten Kreis erfolgen.

Figur 8 zeigt eines der Bremsmodule 66 von Fig. 7 in einer etwas detaillierteren Darstellung. Das Bremsmodul 66 umfasst dabei eine Steuereinrichtung 84 mit einer Haupt-Steuereinheit 80 und einer Neben-Steuereinheit 82, sowie eine Bremse 10, deren Aufbau und Funktion bereits in den Figuren 1 bis 6 erläutert wurde.

Die Haupt-Steuereinheit 80 der Steuereinrichtung 84 erhält von der übergeordneten Steuerungseinrichtung 72 über den Informationspfad 75 Informationen bezüglich des Sollwertes des Bremsmomentes am entsprechenden Rad, bezüglich des Sollzustandes der Feststellbremse bzw. Parkbremse, und der Referenzgeschwindigkeit des Fahrzeuges. Diese Informationen werden über den Zweig 75' redundant übermittelt. Weiterhin steht eine Schnittstelle zur Verfügung, über die ein Fehlersignal (Not-Aus) sowie beispielsweise Aufforderungen des Bremssystems zur Eigendiagnose bzw. Initialisierung übermittelt werden können, oder aber Wartungssignale von der Bremseinheit an die übergeordnete Steuerung.

Die Haupt-Steuereinheit 80 übermittelt über den Informationszweig 76 der übergeordneten Steuerungseinrichtung 72 Informationen bezüglich des Ist-Zustandes des Bremsmomentes des entsprechenden Rades, des Ist-Zustandes der Feststellbremse des entsprechenden Rades, der Drehwinkelgeschwindigkeit des jeweiligen Rades (vom ABS-Sensor), sowie Informationen bezüglich der Eigen-Diagnosen der Haupt-Steuereinheit 80. Diese Informationen werden redundant übermittelt, wie durch den Pfeil 76' verdeutlicht ist.

Die Steuereinrichtung 84 arbeitet sozusagen als lokale Intelligenz des Bremsmoduls 66, um sowohl im Normalbetrieb als auch beim Auftreten von Fehlern die Bremse 10 ordnungsgemäß und zuverlässig anzusteuern. Hierzu übermittelt die Haupt-Steuereinheit 80 den Antrieben 34 und 34' des Aktuators der Bremse 10 die Motorströme $I_{M1}$ und $I_{M2}$ über die beiden Zweige 86 bzw. 88. Die Antriebe 34 und 34' werden durch die beiden Motorströme $I_{M1}$ und $I_{M2}$ entsprechend der vom Fahrersystem 68 (in Fig. 8 nicht dargestellt) übermittelten Befehle und der Regelgrößen angesteuert. Die beiden Antriebe 34 und 34' übermitteln der Haupt-Steuereinheit 80 jeweils die Positionsinformationen $x_1$ und $x_2$ der Position des Keils 18 über die Zweige 90 und 92. Hierbei lassen Plausibilitätsuntersuchungen der beiden Positionssignale Rückschlüsse auf den mechanischen Zustand des Systems, wie z.B. regulären Verschleiß oder das Versagen eines Antriebsstrangs (Spindelbruch) zu.

Die Haupt-Steuereinheit 80 erhält weiterhin über den Zweig 106 die gemessene Spannung $U_{IST}$ vom Bordnetz zur Fehlererkennung, sowie Informationen über das Bremsmoment $M_{Fi}$ (oder andere geeignete Hilfsgrößen) am jeweiligen Rad. Die Informationen über das Bremsmoment $M_{Fi}$ werden redundant über die beiden Zweige 102 und 104 zugeführt, wobei der Sensor körperlich redundant ausgeführt sein kann. Das Bremsmoment $M_{Fi}$ des jeweiligen Rades ist äquivalent zu dem weiter oben erwähnten Reibmoment $M_R$ und wird der Haupt-Steuereinheit 80 entweder zugeführt oder von dieser z.B. aus den anderen weiter oben erwähnten Hilfsgrößen berechnet, wie weiter vorne beschrieben ist. Weiterhin wird der Haupt-Steuereinheit 80 die Drehwinkelgeschwindigkeit des jeweiligen Rades vom zugeordneten ABS-Sensor über den Informationszweig 100 zugeführt.

Die Haupt-Steuereinheit 80 ist in Bezug auf die Neben-Steuereinheit 82 die dominierende Steuereinheit. Zwischen der Haupt-Steuereinheit 80 und der Neben-Steuereinheit 82 werden die gesamten Eigen-Diagnosen der beiden Steuereinheiten ausgetauscht 110, 112. Die Neben-Steuereinheit 82 steuert die Nachstelleinrichtung 42 der Bremse 10 über den Motorstrom $I_{M3}$, der über die Leitung 94 der Nachstelleinrichtung 42 zugeführt wird. Von der Nachstelleinrichtung 42 erhält die Neben-Steuereinheit 82 die Positionsinformation $x_3$ über die Position der Nachstelleinrichtung 42 sowie eine Information, ob die Nachstelleinrichtung 42 an der Position des Endanschlages, d. h. in völlig geöffneter Position, angeordnet ist.

Die Haupt-Steuereinheit 80 und die Neben-Steuereinheit 82 können dabei durch eine Spannung $U_1$ und einen Strom $I_1$ aus einer lokalen Energieversorgung versorgt werden. Dieser lokale Energiespeicher ist vorzugsweise elektrisch (bspw. Kondensator) realisiert, kann aber beispielsweise auch eine Brennstoffzelle sein. Bei Vorliegen einer Drehbewegung am abzubremsenden Bauteil sind auch generatorische Verfahren denkbar. Zur Ausführung von Stellbewegungen können darüber hinaus lokale mechanische Energiespeicher (Federn) zum Einsatz kommen.

Wie oben bereits erwähnt, betrifft die vorliegende Erfindung ein Fehler-Sicherheits-Konzept mit lokaler fehlersicherer Intelligenz zur Erkennung der auszuführenden Fehlerfunktion. Die lokale fehlersichere Intelligenz wird hierbei durch die Haupt-Steuereinheit 80 und der Neben-Steuereinheit 82 der Steuereinrichtung 84 gebildet. Insbesondere wird hierdurch sichergestellt, dass bei Auftreten eines Fehlers im Regelsystem, d. h. bei einer Störung im Bordnetz, bei einer Störung in der Kommunikation zwischen der übergeordneten Steuerungseinrichtung 72 und der Radbremseinheit 66, einer Störung der Bremse 10 (Störung der Nachstelleinheit 42 oder Betriebsbremseinheit 34, 34', 18) eine Fehlerbehandlung in der Bremse durchgeführt wird. Das erfindungsgemäße und im Folgenden näher erläuterte Fehler-Sicherheits-Konzept gewährleistet, dass die Bremse 10 trotz Auftreten eines Fehlers abhängig vom Bewegungszustand des Fahrzeuges offen bleibt bzw. notgeöffnet wird, bzw. bei stehendem Fahrzeug zugespannt wird bzw. zugespannt bleibt. Ein unbeabsichtigtes und durch Fehlfunktion hervorgerufenes Schließen der Bremse bei fahrendem Fahrzeug muss absolut vermieden werden. Andererseits muss bei stehendem Fahrzeug gewährleistet sein, dass selbst bei Auftreten eines Fehlers das Fahrzeug stehen bleibt. Diese Funktionen werden durch die vorliegende Erfindung bereitgestellt.

Dabei trifft die Haupt-Steuereinheit 80 die Entscheidung über die auszuführende Fehlerfunktion aus dem Fahrzeug-Bewegungszustand, nämlich insbesondere einerseits aus der Drehwinkelgeschwindigkeit des jeweiligen Rades, die vom ABS-Sensor zugeführt wird, und/oder über die zeitliche Änderung des Bremsmomentes $M_{Fi}$ am Rad. Die Winkelgeschwindigkeit des Rades ist alleine nicht ausreichend, da beispielsweise beim Gleiten auf einer Eisplatte und gleichzeitiger Vollbremsung das Rad (zumindest anfangs) blockiert, so dass die zeitliche Änderung der Winkelgeschwindigkeit des Rades gleich 0 ist, das Fahrzeug jedoch noch in Bewegung ist. Würde die Haupt-Steuereinheit 80 die Entscheidung, die Bremse 10 im Fall des Auftretens eines Fehlers zu öffnen oder zu schließen nur auf Basis dieser Information treffen, so wäre ein hohes Unfallrisiko gegeben.

Daher wird erfindungsgemäß zusätzlich die zeitliche Änderung des Bremsmomentes $M_{Fi}$ des Rades betrachtet. Falls diese gleich Null ist, und die Winkelgeschwindigkeit des Rades ebenfalls gleich Null ist, so ist das Fahrzeug tatsächlich im Stillstand und die Haupt-Steuereinheit 80 kann die Bremse schließen bzw. geschlossen halten. Falls andererseits einer der beiden Werte ungleich null ist, ist das Fahrzeug in Bewegung und die Bremse 10 muss notgeöffnet werden bzw. geöffnet bleiben. Die Erfindung basiert dabei auf der Erkenntnis, dass selbst wenn die Winkelgeschwindigkeit gleich Null ist, d.h. das Rad sich nicht dreht, das Fahrzeug jedoch trotzdem in Bewegung ist, z.B. gleitet, die zeitliche Änderung des jeweiligen Bremsmomentes ungleich Null ist, da bei einer Bewegung des Fahrzeuges mit blockiertem Rad starke Kräfte auf die Bremse wirken. In einer Weiterentwicklung der Erfindung kann z.B. die Amplitude der zeitlichen Änderung des Bremsmomentes $M_{Fi}$ gemessen werden, um bei geringen Werten, die nur eine sehr langsame und geringfügige Bewegung des Fahrzeuges signalisieren, ein Schließen der Bremse 10 zu veranlassen, um das Fahrzeug endgültig zum Stehen zu bringen, ohne eine Unfallgefahr herauf zu beschwöhren. Zur Plausibilitätsprüfung stehen darüber hinaus bei intakter Kommunikation zum Rest des Fahrzeugs weitere Signale, wie z.B. die geschätzte Fahrzeugreferenzgeschwindigkeit, zur Verfügung.

Im Fehlerfall "Kommunikationsstörung zur übergeordneten Steuerungseinrichtung 72" erfolgt das Öffnen der Bremse 10 über die Antriebe 34 bzw. 34', ebenso im Fehlerfall "Störung in der Nachstell-/Notlöseeinheit 42". Im Fehlerfall "Störung in der Betriebsbremseinheit 34, 34'" erfolgt die Öffnung der Bremse über ein Notöffnen der Nachstelleinheit 42. Dabei wird im Fehlerfall eine Fehlerfunktion ausgeführt, die Rad-Bremseinheit 66 wird deaktiviert und, falls die Kommunikation zur übergeordneten Steuerungseinrichtung 72 noch möglich ist, eine Fehlermeldung an den Fahrer generiert.

Sollte die Kommunikation zwischen der übergeordneten Steuerungseinrichtung 72 und der Rad-Bremseinheit 66 ausgefallen sein, übernimmt die lokale Intelligenz, d.h. die Haupt-Steuereinheit 80 bzw. die Neben-Steuereinheit 82 das Fehlerhandling und die übergeordnete Steuerungseinrichtung 72 generiert eine Fehlermeldung an den Fahrer. Dabei wird die Fehlerfunktion gemeldet, welche die lokale Intelligenz am wahrscheinlichsten ausführt. Die Fehlersicherheit kann weiter erhöht werden durch das Vorsehen eines lokalen Energiespeichers, wie z.B. eines Kondensators, der die einmalige Ausführung einer aktiven Fehlerfunktion (Lösen oder Feststellen der Bremse 10) ermöglicht, obwohl die Strom/Spannungsversorgung durch das Bordnetz komplett ausgefallen ist. Weiterhin ermöglicht die Aufteilung der lokalen Intelligenz in zwei intelligente Untersysteme, d.h. die Haupt-Steuereiheit 80 und die Neben-Steuereinheit 82, im Falle des Ausfallens einer der beiden Steuereinheiten, die Übernahme der Funktionen durch die andere, nicht ausgefallene Steuereinheit. Im Normalfall ist die Haupt-Steuereinheit 80 jedoch die dominante Steuereinheit. Die Haupt-Steuereinheit 80 ist vorzugsweise digital ausgebildet, ebenso die Neben-Steuereinheit 82. Alternativ können die beiden Steuereinheiten auch analog ausgebildet sein, oder auch nur die Neben-Steuereinheit 82. Weiterhin ist die Ausführung des elektrischen Aktuators der Bremse 10 mit zwei symmetrisch wirkenden Antrieben 34 und 34' insofern vorteilhaft, da aus der jeweiligen Position x1 bzw. x2 der beiden Antriebe 34 und 34' sowie aus den Ansteuerinformationen, d.h. dem Motorstrom $I_{M1}$ bzw. $I_{M2}$ Fehlfunktionen der Bremseinheit (Betriebsbremse) erkennbar werden.

Weiterhin können die symmetrischen Antriebe 34 und 34' und die an die Haupt-Steuereinheit 80 übermittelten Informationen zu Eigen-Diagnosen in nicht kritischen Fehlerfällen verwendet werden, wie z.B. bei Verschleiß im Antriebsstrang. Die Nachstelleinrichtung 42 ist gleichzeitig, wie oben erwähnt, die Nachstelleinheit für den Verschleiß der Bremsbeläge und die Notlöseeinheit für den Fall einer Störung der Betriebsbremseinheit. Weiterhin ist an der Nachstelleinheit 42 ein Endanschlags-Sensor vorgesehen, der detektiert, ob die Nachstelleinheit 42 offen ist. Diese Information wird vorteilhafter Weise im System so gespeichert, dass sie selbst bei längerer Stilllegung des Fahrzeuges und des Bordnetzes noch ausgelesen werden kann. Es ist noch einmal hervorzuheben, dass die Nachstelleinheit 42 eine Nachstellung nur bei offener Bremse, d.h. ohne Last ermöglicht. Weiterhin wird die aktive Lösung bzw. Notöffnung selbst unter Last durchgeführt. Hierbei wird Energie aus dem Federspeichersystem Bremssattel ausgekoppelt - es ist also keine weitere Energie in das System einzubringen. Unter normalen Bedingungen hält die Nachstelleinheit 42 den Keil 18 unter Bremslast.

Ein mögliches Ausführungsbeispiel als hydraulische Nachstellung mit automatischer Notlösung im Überlastfall wird nunmehr bezugnehmend auf Figur 9 erläutert.

Der Zylinder 94 bewirkt die Nachstellung der Bremse, indem er auf die nachzustellende Mechanik 95 wirkt. Das Reservoir 91 ist der Vorratsbehälter für die Hydraulikflüssigkeit und stellt ein abgeschlossenes expansionsfähiges Volumen dar. Über das lineare Antriebselement 99, beispielsweise als Spule mit Tauchanker ausgeführt, wird dabei die Pumpbewegung und damit der Pumpvorgang realisiert. Dieses Antriebselement 99 betätigt darüber hinaus das Zweiwege-Ventil 96, welches das Reservoir 91 von dem Zylinder 94 trennt - oder einen Druckausgleich ermöglicht. Mit 98 ist allgemein eine bistabile Arretierung mit Überlastfunktion bezeichnet, die eine Feder und eine Magnetspule aufweist und bspw. für einen Pumpvorgang elektrisch gelüftet werden kann.

Mittels der Ventile 97a und 97b kann zur Nachstellung Hydraulikflüssigkeit von dem Reservoir 91 zum Zylinder 94 gepumpt werden.

Mit 92 ist der Pumpenkolben bezeichnet, der über die Ventile 97a und 97b zur Nachstellung Hydraulikflüssigkeit von dem Reservoir 91 zum Zylinder 94 pumpen kann.

Der Kolben 93 realisiert die Überlastfunktion (Notöffnung) der Nachstellung, da dieser mit dem Druck aus Zylinder 94 beaufschlagt wird und somit eine Kraft in Richtung der Durchlassstellung des Ventils 96 aufbringt. Somit ist weiterhin sichergestellt, dass zum Lösen der Bremse keine Antriebsenergie für das Antriebselement 99 zugeführt werden muss - es ist ausreichend, die Arretierung 98 kurzzeitig zu lösen, so dass das Ventil 96 den Druckabbau im Zylinder 94 ermöglicht.

Wesentlich ist hierbei anzumerken, dass die Arretierung 98 sicherstellt, dass im Falle einer durchgeführten Notöffnung der Bremse keine Kraft im Zylinder 94 und damit in der Bremszange mehr aufgebaut werden kann.

Darüber hinaus sind weitere Ausführungsformen denkbar. Eine Möglichkeit stellt ein eigenständiger mechanischer Aktuator dar, welcher über einen nicht selbsthemmenden Spindeltrieb verfügt, der mit einer Verriegelung versehen ist. Diese Verriegelung kann aktiv über ein weiteres Betätigungselement gelöst werden. Im Falle einer solchen Notöffnung wird die im mechanischen System Bremszange gespeicherte Energie über die selbsttätig anlaufende Spindel freigesetzt und so die Zuspannkraft abgebaut.

Des Weiteren seien nicht zerstörungsfreie Notöffnungsmechanismen erwähnt, welche beispielsweise über pyrotechnische Effekte (Zündhütchen etc.) den Kraftfluss unterbrechen. Ein Zündfunke zur Auslösung eines solchen Systems könnte beispielsweise aus einem piezoelektrischen Element stammen, das die durch die Zuspannkraft der Bremse entstehenden Verformungen von Bremsenteilen in eine elektrische Spannung umwandelt und auf diese Weise bei unzulässig hohen Kräften eine automatische Notöffnung herbei führt.

Im Folgenden folgt eine detailliertere Aufstellung der Fehlerfälle und der Komponenten. Danach folgen unter der Überschrift "Fail-Safe-Concept" noch einmal die allgemeinen Anforderungen und Lösungsvorschläge der vorliegenden Erfindung. Jeweils zu beachten, dass die Betriebsbremse BB und die Feststellbremse FB verschiedene Funktionen der Bremse 10 in den verschiedenen Betriebsarten darstellen.

*Fehler in der Bordnetzversorgung*

Zunächst werden Störungen der Stromversorgung U an einem Radbremsmodul 66 betrachtet.

Bei einem Ausfall der primären 78 Bordnetzversorgung U an einem Radbremsmodul 66 wird die weitere Stromzufuhr durch den redundanten Kreis 78' bereitgestellt. Somit kann die volle Funktionsfähigkeit des betroffenen Bremsmoduls 66 erhalten bleiben. Weiterhin wird eine Fehlermeldung "Werkstatt aufsuchen" an den Fahrer ausgelöst. Ebenso wird im Fall eines Kurzschlusses der primären 78 Bordnetzversorgung U verfahren. Für diesen Fall ist es wesentlich, dass die primäre 78 und die redundante 78' Stromversorgung voneinander entkoppelt sind.

Bei einem Totalausfall der Bordnetzversorgung U an einem Radbremsmodul 66, also bei einem Ausfall der primären 78 und der redundanten 78' Stromversorgung, wird der lokale Energiespeicher $U_1$ des betroffenen Radbremsmoduls 66 eingesetzt. Dieser ist derart ausgelegt, dass eine einmalige aktive Fehlerfunktion ausgeführt werden kann. Dabei wird das Radbremsmodul 66 deaktiviert.

Im Folgenden werden Störungen der Stromversorgung U betrachtet, die das gesamte Bremssystem 70 betreffen.

Bei einem Ausfall der primären 78 Bordnetzversorgung U am Bremssystem 70 wird die weitere Stromzufuhr durch den redundanten Kreis 78' bereitgestellt. Somit kann die volle Funktionsfähigkeit des Bremssystems 70 erhalten bleiben. Weiterhin wird eine Fehlermeldung "Werkstatt aufsuchen" an den Fahrer ausgelöst. Ebenso wird im Fall eines Kurzschlusses der primären 78 Bordnetzversorgung U verfahren. Für diesen Fall ist es wesentlich, dass die primäre 78 und die redundante 78' Stromversorgung voneinander entkoppelt sind.

Bei einem Totalausfall der Bordnetzversorgung U am Bremssystem 70, also bei einem Ausfall der primären 78 und der redundanten 78' Stromversorgung, werden die lokalen Energiespeicher $U_1$ der betroffenen Radbremsmodule $66_i$ eingesetzt. Diese Energiespeicher sind derart ausgelegt, dass eine einmalige aktive Fehlerfunktion ausgeführt werden kann. Dabei werden alle Radbremsmodule 66ᵢ deaktiviert. Bei stehendem Fahrzeug wird die Feststellbremse aktiviert bzw. bleibt die Feststellbremse aktiviert. Bei fahrendem Fahrzeug werden die Bremsen geöffnet oder eine Notbremsfunktion aktiviert, welche z.B. lokal kontrolliert ein kleines unkritisches Bremsmoment auf die Räder aufbringt.

Wird das Bordnetz abgeklemmt, z.B. im Rahmen von Montage- oder Wartungsarbeiten, wird die Radbremseinheit 70 in den Wartungsmodus gefahren. Dies kann beispielsweise mittels Software oder auch durch manuell ausgeführte Erdung erfolgen. Die demontierte Radbremseinheit 66 ist dann kraft- und energiefrei.

*Fehler bzgl. der Kommunikation zwischen dem zentralen Steuergerät 72 und einer Radbremseinheit 66*

Bei Auftreten eines Widerspruchs bei der Eigendiagnose der Radbremseinheit 66 wird durch die lokale Intelligenz 84 eine einmalige Fehlerfunktion ausgeführt und die Radbremseinheit 66 deaktiviert. Ebenso wird im Fall eines Widerspruchs zwischen Informationen von der Radbremseinheit 66 und dem zentralen Steuergerät72 verfahren. Ebenso wird weiterhin verfahren, wenn von dem zentralen Steuergerät 72 an die Bremseinheit 66 ein Not-Aus-Signal gesendet wird.

Bei einem Widerspruch in der Fremddiagnose des zentralen Steuergeräts 72 wird von dem zentralen Steuergerät 72 ein Not-Aus-Signal an die Bremseinheit 66 gesendet und - wie oben erwähnt - daraufhin die Radbremseinheit 66 deaktiviert.

*Fehler durch Störung der Radbremseinheit 66*

Wird der maximale Motorstrom überschritten, so kann dieser Fehler durch einen defekten Antriebsstrang (Spindel/Lager/Motor) oder durch ein Überschreiten des maximalen Reibwertes verursacht sein. In diesem Fall wird eine Notlösung der Bremse mittels der Nachstelleinheit 42 ausgelöst und die Radbremseinheit 66 deaktiviert. Außerdem wird eine Fehlermeldung an das zentrale Steuergerät 72 erzeugt.

Ein Defekt im Antriebsstrang (Spindel/Lager/Motor) kann zu einer fehlerhaften Bremsbetätigung führen. Ein derartiger Fehler kann aus den Daten der beiden Motoren 34 und 34' erkannt werden. In diesem Fall wird eine Notlösung der Bremse mittels der Nachstelleinheit 42 ausgelöst und die Radbremseinheit 66 deaktiviert. Außerdem wird eine Fehlermeldung an das zentrale Steuergerät 72 erzeugt.

Ein Überschreiten des Haftreibwertes kann (als "Sonderfall") dazu führen, dass ein Lösen der Feststellbremse mit Hilfe der Betriebsbremse nicht möglich ist. In diesem Fall kann ein Lösen der Bremse mit Unterstützung durch die Notlösefunktion der Nachstelleinheit erfolgen. Danach kann die Radbremseinheit wieder normal in Betrieb genommen werden.

*Fehler durch Störung der Nachstelleinheit 42*

Ein Defekt im Antriebsstrang (Spindel/Lager/Motor) kann dazu führen, dass der maximale Motorstrom überschritten wird. In diesem Fall wird die Radbremseinheit 66 deaktiviert und eine Fehlermeldung an das zentrale Steuergerät 72 ausgelöst.

Ein Defekt im Antriebsstrang (Spindel/Lager/Motor) kann auch dazu führen, dass ein Defekt bei der Betätigung der Nachstelleinheit 42 auftritt. Ein solcher Fehler kann aus Daten 96 des Motors 44 der Nachstelleinheit 42 oder auch aus Daten 98 bzgl. des Endanschlags erkannt werden. Auch in diesem Fall wird die Radbremseinheit 66 deaktiviert und eine Fehlermeldung an das zentrale Steuergerät 72 ausgelöst. Hierbei wird das Öffnen des Bremse mit Hilfe der noch intakten Betriebsbremseinheit durchgeführt.

Einige Merkmale der Erfindung sollen nunmehr nochmals angeführt werden:

Die lokale Steuereinrichtung kann mit Hilfe der lokalen Haupt- und Nebensteuereinrichtung lokale Plausibilitätskontrollen durchführen und somit lokale Fehler erkennen, durch Plausibilitätskontrollen Fehler an anderen Bremsaktuatoren erkennen oder deren Fehlererkennung absichern und durch Plausibilitätskontrollen Fehler an der zentralen Steuereinrichtung eines Fahrzeugs (z.B. fehlerhafte Vorgaben vom zentralen Steuergerät) erkennen oder deren Fehlererkennung absichern.

Die lokale Steuereinrichtung kann aus mehr als einem Prozessor aufgebaut sein und somit eine weitere Redundanz aufweisen.

"Steuergeräte" im Sinne der vorliegenden Beschreibung umfasst Steuerung oder Regelung sowie eine Kombination davon.

Erfindungsgemässe "Steuergeräte" können analog und/oder digital aufgebaut sein.

Die Fehlerstrategien für Vorder- und Hinterräder können unterschiedlich sein.

Es gibt die Möglichkeit der Fehlerbehandlung durch Öffnen der Bremse mit Hilfe der Betriebsbremsaktuatoren bei Auftreten eines Fehlers, z.B. in der Nachstelleinrichtung.

Bei Ausfall des einen Betriebsaktuators besteht die Möglichkeit der Fehlerbehandlung, z.B. Notöffnen, mit Hilfe des zweiten Betriebsaktuators.

Es gibt die Möglichkeit der Fehlerbehandlung durch Notlösung mit Hilfe der Nachstelleinrichtung.

Die Diagnose an den einzelnen Bremsen kann zeitlich versetzt erfolgen (nicht alle Bremsen gleichzeitig im Diagnose/Initialisierungs-Modus).

**Patentansprüche**

1. Steuersystem für eine elektromechanische Bremse mit Selbstverstärkung, aufweisend:

   - Mittel zum Erkennen eines Fehlers der Bremse,
   - Mittel zur Erfassung des aktuellen Bewegungszustands des zu bremsenden Geräts, **dadurch gekennzeichnet, dass**
   Mittel zum Öffnen bzw. Schließen der Bremse bei Erkennen eines Fehlers abhängig von dem erfassten Bewegungszustandes des zu bremsenden Geräts vorgesehen sind,
   und dass die Mittel zum Öffnen bzw. Schließen der Bremse bei Erkennen eines Fehlers die Bremse öffnen bzw. geöffnet lassen, falls die Erfassung des Bewegungszustandes eine Bewegung des zu bremsenden Geräts ergibt; und
   dass die Mittel zum Öffnen bzw. Schließen der Bremse bei Erkennen eines Fehlers die Bremse schliessen bzw. geschlossen lassen, falls die Erfassung des Bewegungszustandes einen Stillstand oder eine Bewegung des zu bremsenden Geräts unterhalb eines Schwellenwerts ergibt.

2. Steuersystem nach Anspruch 1,
   **dadurch gekennzeichnet,**
   **dass** die Mittel zur Erkennung des Bewegungszustands die Winkelgeschwindigkeit einer der Bremse zugeordneten Bremsscheibe erfassen.

3. Steuersystem nach Anspruch 1 oder 2,
   **dadurch gekennzeichnet,**
   **dass** die Mittel zur Erkennung des Bewegungszustands die zeitliche Änderung der Reibkraft bzw. des Reibmomentes zwischen der Bremse und einer der Bremse zugeordneten Bremsscheibe erfassen.

4. Steuersystem nach einem der Ansprüche 1 bis 3, **dadurch gekennzeichnet,**
   **dass** es ein übergeordnetes Steuersystem für mehrere Bremsen sowie eine lokale, einer einzelnen Bremse zugeordnete Steuereinrichtung aufweist.

5. Steuersystem nach Anspruch 4,
   **dadurch gekennzeichnet,**
   **dass** die lokale Steuereinrichtung eine HauptSteuereinrichtung zur Steuerung einer Betriebsbremse und eine Neben-Steuereinrichtung zur Steuerung einer Nachstelleinrichtung für die Betriebsbremse umfasst.

6. Steuersystem nach Anspruch 4 oder 5,
   **dadurch gekennzeichnet,**
   **dass** die lokale Steuereinrichtung dazu ausgelegt ist, Fehler zu erkennen, über die Fehlerbehandlungstrategie zu entscheiden und die Fehlerbehandlung durchzuführen.

7. Steuersystem nach Anspruch 6,
   **dadurch gekennzeichnet,**
   **dass** die lokale Steuereinrichtung dazu ausgelegt ist, autonom Fehler zu erkennen, über die Fehlerbehandlungstrategie zu entscheiden und die Fehlerbehandlung durchzuführen, auch wenn die Kommunikation zur zentralen Steuereinheit unterbrochen ist.

8. Steuersystem nach einem der Ansprüche 4 bis 7,
   **gekennzeichnet durch**
   eine lokale Not-Energieversorgung für die lokale Steuereinrichtung und/oder eine aktive Fehlerbehandlungs-Betätigung der Bremse.

9. Steuersystem nach einem der Ansprüche 4 bis 8,

**dadurch gekennzeichnet,**
**dass** die lokale Steuereinrichtung zur Ausführung einer Plausibiltätskontrolle eingehender Signale ausgelegt ist.

10. Steuersystem nach einem der vorhergehenden Ansprüche, wobei die Bremse aufweist:

- eine Bremsscheibe,
- wenigstens einen Reibbelag, und
- eine Nachstelleinrichtung, die eine Abnutzung des Reibbelags ausgleicht, wobei

bei Auftreten eines spezifizierten Fehlers die Nachstelleinrichtung zur Notöffnung der Bremse ausgelegt ist.

11. Steuersystem nach Anspruch 10,
**dadurch gekennzeichnet,**
**dass** die Nachstelleinrichtung selbsthemmend ist, wobei die Selbsthemmung bei Auftreten des spezifizierten Fehlers lösbar ist.

12. Verfahren zur Fehlerbehandlung bei einer elektromechanischen Bremse mit Selbstverstärkung, aufweisend die folgenden Schritte:

- Erkennen eines Fehlers der Bremse,
- Erfassung des aktuellen Bewegungszustands des zu bremsenden Geräts, und
- Öffnen bzw. Schließen der Bremse bei Erkennen eines Fehlers abhängig von dem erfassten Bewegungszustandes des zu bremsenden Geräts.

13. Verfahren nach Anspruch 12,
**dadurch gekennzeichnet,**
**dass** der Bewegungszustands mittels der Winkelgeschwindigkeit einer der Bremse zugeordneten Bremsscheibe erfasst wird.

14. Verfahren nach Anspruch 13,
**dadurch gekennzeichnet,**
**dass** zur Erkennung des Bewegungszustands die zeitliche Änderung der Reibkraft bzw. des Reibmomentes zwischen der Bremse und einer der Bremse zugeordneten Bremsscheibe erfasst wird.

15. Verfahren nach einem der Ansprüche 12 bis 14,
**dadurch gekennzeichnet,**
**dass** bei Erkennung eines Fehlers die Bremse geöffnet wird bzw. offen gehalten wird, falls die Erfassung des Bewegungszustandes eine Bewegung des zu bremsenden Geräts ergibt.

16. Verfahren nach einem der Ansprüche 12 bis 15,
**dadurch gekennzeichnet,**
**dass** bei Erkennen eines Fehlers die Bremse geschlossen bzw. geschlossen gehalten wird, falls die Erfassung des Bewegungszustandes einen Stillstand oder eine Bewegung des zu bremsenden Geräts unterhalb eines Schwellenwerts ergibt.

17. Verfahren nach einem der Ansprüche 12 bis 16,
**dadurch gekennzeichnet,**
**dass** lokal Fehler erkannt, über die Fehlerbehandlungstrategie entschieden und die Fehlerbehandlung durchgeführt wird.

18. Verfahren nach Anspruch 17,
**dadurch gekennzeichnet**,
lokal eine Plausibiltätskontrolle von Signalen ausgeführt wird.

**Claims**

1. Control system for an electromechanical brake with self-energization, having:

- means for identifying a fault in the brake,
- means for detecting the current movement state of the device to be braked,

**characterized**

**in that** means for opening and closing the brake if a fault is identified as a function of the detected movement state of the device to be braked are provided, and in that the means for opening and closing the brake if a fault is identified open the brake or allow the brake to be opened if the result of the detection of the movement state is that the device to be braked is moving, and

**in that** the means for opening and closing the brake if a fault is identified close the brake or allow the brake to be closed if the result of the detection of the movement state is that the device to be braked is stationary or is moving to an extent below a threshold value.

2. Control system according to Claim 1, **characterized in that** the means for identifying the movement state detect the angular velocity of a brake disc which is associated with the brake.

3. Control system according to Claim 1 or 2, **characterized in that** the means for identifying the movement state detect the change over time in the frictional force or the frictional torque between the brake and a brake disc which is associated with the brake.

4. Control system according to one of Claims 1 to 3, **characterized in that** it has a superordinate control system for a plurality of brakes and also a local control device which is associated with a single brake.

5. Control system according to Claim 4, **characterized in that** the local control device comprises a main control device for controlling a service brake and a secondary control device for controlling an adjusting device for the service brake.

6. Control system according to Claim 4 or 5, **characterized in that** the local control device is designed to identify faults, to decide on the fault correction strategy and to carry out the fault correction process.

7. Control system according to Claim 6, **characterized in that** the local control device is designed to identify faults independently, to decide on the fault correction strategy and to carry out the fault correction process even if communication with the central control unit is interrupted.

8. Control system according to one of Claims 4 to 7, **characterized by** a local emergency power supply for the local control device and/or an active fault correction activation of the brake.

9. Control system according to one of Claims 4 to 8, **characterized in that** the local control device is designed for implementing a plausibility check on incoming signals.

10. Control system according to one of the preceding claims, wherein the brake has:

   - a brake disc,
   - at least one friction lining, and
   - an adjusting device which compensates for wear of the friction lining, wherein the adjusting device is designed for emergency opening of the brake if a specified fault occurs.

11. Control system according to Claim 10, **characterized in that** the adjusting device is self-locking, wherein the self-locking means can be released if the specified fault occurs.

12. Method for fault correction in an electromechanical brake with self-energization, comprising the following steps of:

   - identifying a fault in the brake,
   - detecting the current movement state of the device to be braked, and
   - opening and closing the brake if a fault is identified as a function of the detected movement state of the device to be braked.

13. Method according to Claim 12, **characterized in that** the movement state is detected by means of the angular velocity of a brake disc which is associated with the brake.

14. Method according to Claim 13, **characterized in that** the change over time in the frictional force or the frictional torque between the brake and a brake disc which is associated with the brake is detected in order to identify the movement state.

15. Method according to one of Claims 12 to 14, **characterized in that**, if a fault is identified, the brake is opened or kept open if the result of the detection of the movement state is that the device to be braked is moving.

16. Method according to one of Claims 12 to 15, **characterized in that**, if a fault is identified, the brake is closed or kept closed if the result of the detection of the movement state is that the device to be braked is stationary or is moving to an extent below a threshold value.

17. Method according to one of Claims 12 to 16, **characterized in that** local faults are identified, a decision is made on the fault correction strategy, and the fault correction process is carried out.

18. Method according to Claim 17, **characterized in that** a plausibility check on signals is implemented locally.


**Revendications**

1. Système de commande pour un frein électromécanique servo-assisté, présentant :

   - des moyens d'identification d'une erreur du frein,
   - des moyens de détection de l'état de déplacement actuel de l'appareil à freiner, **caractérisé en ce que** sont prévus des moyens d'ouverture ou de fermeture du frein lors de la détection d'une erreur en fonction de l'état de déplacement détecté de l'appareil à freiner,
   et **en ce que** les moyens d'ouverture ou de fermeture du frein ouvrent le frein ou le maintiennent ouvert lors de la détection d'une erreur, au cas où la détection de l'état de déplacement révèle un déplacement de l'appareil à freiner ; et
   **en ce que** les moyens d'ouverture ou de fermeture du frein ferment le frein ou le maintiennent fermé lors de la détection d'une erreur, au cas où la détection de l'état de déplacement révèle un arrêt ou un déplacement de l'appareil à freiner en-dessous d'une valeur seuil.

2. Système de commande selon la revendication 1,
   **caractérisé en ce que**
   les moyens de détection de l'état de déplacement détectent la vitesse angulaire d'un disque à frein affecté au frein.

3. Système de commande selon la revendication 1 ou 2,
   **caractérisé en ce que**
   les moyens de détection de l'état de déplacement détectent la modification dans le temps de la force de frottement ou du moment de frottement entre le frein et un des disques à frein affectés au frein.

4. Système de commande selon l'une des revendications 1 à 3,
   **caractérisé en ce que**
   il présente un système de commande maître pour plusieurs freins ainsi qu'un dispositif de commande local affecté à un frein unique.

5. Système de commande selon la revendication 4,
   **caractérisé en ce que**
   le dispositif de commande local comprend un dispositif de commande principal pour la commande d'un frein de service et un dispositif de commande secondaire pour la commande d'un dispositif d'ajustage pour le frein de service.

6. Système de commande selon la revendication 4 ou 5,
   **caractérisé en ce que**
   le dispositif de commande local est configuré pour identifier des erreurs, décider de la stratégie de traitement des erreurs et effectuer le traitement des erreurs.

7. Système de commande selon la revendication 6,
   **caractérisé en ce que**
   le dispositif de commande local est configuré pour identifier des erreurs de façon autonome, décider de la stratégie de traitement des erreurs et effectuer le traitement des erreurs, même si la communication avec le dispositif de commande central est interrompu.

8. Système de commande selon l'une des revendications 4 à 7,
   **caractérisé par**
   une alimentation en énergie de secours et locale pour le dispositif de commande local et/ou un actionnement actif du traitement des erreurs du frein.

9. Système de commande selon l'une des revendications 4 à 8,
   **caractérisé en ce que**
   le dispositif de commande local est configuré pour exécuter un contrôle de plausibilité des signaux entrants.

10. Système de commande selon l'une des revendications précédentes, le frein présentant :

    - un disque à frein,
    - au moins une couche ou revêtement de frottement, et
    - un dispositif d'ajustage, qui compense une usure de la couche de frottement,
    le dispositif d'ajustage étant configuré pour une ouverture de secours du frein en cas d'apparition d'une erreur spécifiée.

11. Système de commande selon la revendication 10 :

    **caractérisé en ce que**
    le dispositif d'ajustage est à blocage automatique, le blocage automatique pouvant être débloqué en cas d'apparition de l'erreur spécifiée.

12. Procédé pour le traitement d'erreurs sur un frein électromécanique servo-assisté présentant les étapes suivantes :

    - identification d'une erreur du frein,
    - détection de l'état de déplacement actuel de l'appareil à freiner, et
    - ouverture ou fermeture du frein en cas de détection d'une erreur en fonction de l'état de déplacement détecté de l'appareil à freiner.

13. Procédé selon la revendication 12,
    **caractérisé en ce que**
    l'état de déplacement est détecté au moyen de la vitesse angulaire d'un disque à frein affecté au frein.

14. Procédé selon la revendication 13,
    **caractérisé en ce que**, pour identifier l'état de déplacement, la modification dans le temps de la force de frottement ou du moment de frottement entre le frein et un des disques à frein affectés au frein est détectée.

15. Procédé selon l'une des revendications 12 à 14,
    **caractérisé en ce que**
    le frein est ouvert ou maintenu ouvert lors de la détection d'une erreur, au cas où la détection de l'état de déplacement révèle un déplacement de l'appareil à freiner.

16. Procédé selon l'une des revendications 12 à 15,
    **caractérisé en ce que**
    le frein est fermé ou maintenu fermé lors de la détection d'une erreur, au cas où la détection de l'état de déplacement révèle un arrêt ou un déplacement de l'appareil à freiner en-dessous d'une valeur seuil.

17. Procédé selon l'une des revendications 12 à 16,
    **caractérisé en ce que**
    des erreurs sont identifiées localement, la stratégie de traitement des erreurs est choisie et le traitement des erreurs est effectué.

18. Procédé selon la revendication 17,
    **caractérisé en ce que**

un contrôle de plausibilité de signaux est exécuté localement.

10

III

26

12

II

II

III

A

14

# Fig. 1

Fig. 2

Fig. 3

Fig. 4

Fig. 5

EP 1 507 987 B1

$F_N$

$F_A$

$\varphi$

$F_R$

Fig. 6

21

Bremssystem:

Bordnetz: U,I

ebrake Rad 1 · ebrake Rad 2 · ebrake Rad ... · ebrake Rad n

Zentrales Steuergerät

Fahrer

Kommunikation:
⇑ Sollwert Fahrzeugverz.
⇑ Sollzustand Parkbremse
⇓ Istwert Fahrzeugverz.
⇓ Ist-Zustand Parkbremse
⇓ Diagnosen

notwendig:
redundant:

Fig. 7

EP 1 507 987 B1

# Radbremsmodul:

eBrake i

lokales Steuergerät 1
Eigen-Diagnose

end
$x_3$
$I_{M3}$

C

A

D

B

lokales Steuergerät 2
Eigen-Diagnose

$U_l, I_l$

$U_{IST}$
$M_{F,l}$
$M_{F,l}$

$\dot{\varphi}_{i(ABS)}$

$I_{M1}$
$x_1$
$I_{M2}$
$x_2$

④

③

②

Zentrales Steuergerät

Anmerkungen:
Radbremseinheit i, mit i=1...n

notwendig: ⟶▷
redundant: ⟶▶

A: Aktuator 1, Betriebsbremse
B: Aktuator 2, Betriebsbremse
C: Aktuator 3, Nachstelleinheit
D: Selbstverstärkungsmechanik

Kommunikation:
⇧ Sollwert Fahrzeugverz.
⇧ Sollzustand Parkbremse
⇧ Referenzgeschwindigkeit
⇧ Schnittstelle:
⇩ Not-Aus, Diagnosen, Initialisierung, Wartung
⇩ Istwert Fahrzeugverz.
⇩ Ist-Zustand Parkbremse
⇩ Rad-Winkelgeschwindigkeit

Fig. 8

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19819564 C2
- US 6152545 A